# EUROPEAN PATENT SPECIFICATION

(11) **EP 1 369 009 B1**
(45) Date of publication and mention of the grant of the patent: **25.07.2007**
(21) Application number: 03076273.6
(22) Date of filing: 01.05.2003
(51) Int. Cl.: A01B 69/00

(54) **An agriculture machine for performing an agricultural operation, in particular crop processing**
Landwirtschaftliche Maschine zur Behandlung von Erntegut
Machine agricole pour le traitement de récolte

(30) Priority: 06.06.2002 NL 1020797
(43) Date of publication of application: 10.12.2003
(73) Proprietor: Lely Enterprises AG, 6300 ZUG (CH)
(72) Inventor: van den Berg, Karel, 2971 BR Bleskensgraaf (NL); Sie, Howard, 3037 VC Rotterdam (NL); Miedema, Theo Jan, 2676 VB Maasdijk (NL)
(74) Representative: Corten, Maurice Jean F.M.

(56) References cited:
- DE-A- 2 210 781
- GB-A- 1 033 184
- GB-A- 2 124 798
- US-A- 3 548 966
- US-A- 4 354 339
- US-A- 4 546 840
- US-A- 4 831 813
- PATENT ABSTRACTS OF JAPAN vol. 012, no. 271 (P-736), 28 July 1988 (1988-07-28) & JP 63 053471 A (ISEKI & CO LTD), 7 March 1988 (1988-03-07)

## Description

The invention relates to an agricultural machine for performing an agricultural operation, in particular crop processing, according to the preamble of claim 1.

Such an agricultural machine is known from US-A-3,548,966.

The present invention aims inter alia at providing an agricultural machine for performing an agricultural operation, in particular crop processing, which machine comprises an improved safety-system.

For this purpose, according to the invention an agricultural machine of the above-described type comprises the features of the characterizing part of claim 1. Due to this, it is possible to detect a non-operating or incorrectly operating mechanical detecting device that can reduce safety. The stopping element is in particular connected to the checking device for receiving the checking signal, the functioning of the stopping element depending on the received checking signal. Thus, when it has been established that a detecting device is non-operating or incorrectly operating, for example the movement of the agricultural machine as well as the performance of the agricultural operation can be made impossible.

The invention can in particular be applied if the agricultural machine is an autonomous agricultural machine, i.e. an agricultural machine that does not require a driver for being moved.

A further improvement of safety is achieved if the stopping element is also suitable for stopping the agricultural operation, in particular crop processing, in dependence on the detection signal.

In an embodiment of an agricultural machine according to the invention the mechanical detecting device comprises a comb. Alternatively or additionally, the mechanical detecting device comprises a roll with feelers. Alternatively or additionally, the mechanical detecting device comprises a bracket with feelers. Alternatively or additionally, the mechanical detecting device comprises an arm with a feeler. As feelers pressure-sensors known per se may be used for example.

In an embodiment of an agricultural machine according to the invention, the mechanical detecting device is movably disposed on the agricultural machine.

In an embodiment of an agricultural machine according to the invention, the mechanical detecting device is pivotably disposed on the agricultural machine. Here it is possible to emit a signal for operating the stopping element in dependence on the degree of pivoting.

The agricultural machine comprises in particular a direction-of-travel-determining element for determining the direction of travel of the agricultural machine, the mechanical detecting device being movable with the aid of data from the direction-of-travel-determining element.

The invention will be explained hereinafter in further detail with reference to the embodiments shown in the drawing, in which:

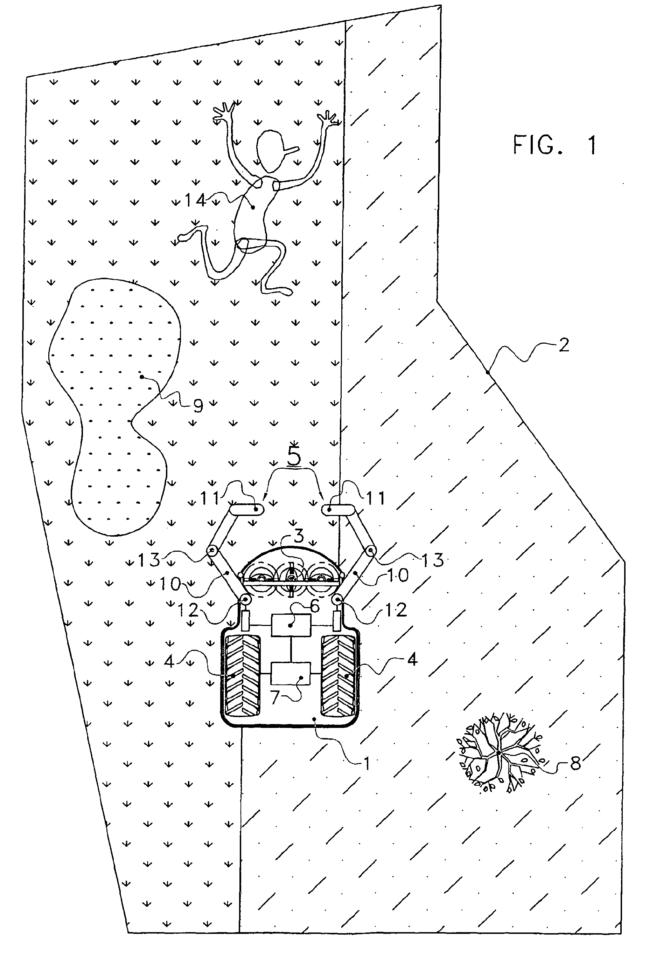

Figure 1 shows schematically in plan view an autonomous agricultural machine in an agricultural parcel in an embodiment of the invention.

Figure 1 shows schematically in plan view an autonomous agricultural machine 1 in an agricultural parcel 2 in an embodiment of the invention. Although the invention will be described with reference to an autonomous agricultural machine, it will be obvious that the invention is not limited thereto. It is pointed out here that an autonomous machine, i.e. a machine that does not require a driver for being moved, but moves with the aid of inter alia a position-determining system, is known per se and will not be set out here in further detail for the sake of simplicity of the description. The autonomous agricultural machine 1 is suitable for performing an agricultural operation, in particular crop-processing, on a crop that is present on the agricultural parcel 2. In the embodiment shown the autonomous agricultural machine 1 is an autonomous mowing machine that mows crop that is present on the agricultural parcel 2 by means of a mowing unit 3. Although several sorts of mowing units known per se may be used, in the embodiment shown the mowing unit 3 is constituted by mowing discs that are present on a cutter bar and are rotatable about an axis, which mowing discs are provided with mowing knives. It will be obvious that the agricultural machine can also be an agricultural machine for performing other crop-processing operations.

The agricultural machine 1 is supported and moved over the agricultural parcel 2 by means of wheels 4. The autonomous agricultural machine 1 further comprises a mechanical detecting device 5 for detecting a force acting on the detecting device and for emitting a detection signal depending on the detected force. The agricultural machine 1 further comprises a stopping element 6 for stopping the movement of the agricultural machine 1 in dependence on the detection signal, for example by interrupting the drive 7 of the wheels 4.

The agricultural machine 1 further comprises a known per se (non-shown) position-determining element, for determining the position of the autonomous agricultural machine 1 in the agricultural parcel 2 by means of for example a GPS-system. This position-determining element may also be used as direction-of-travel-determining element for determining the direction of travel of the agricultural machine 1. In the present case the position-determining element is provided with a memory suitable for containing information with respect to the agricultural parcel 2, such as information with respect to the position of a tree 8, and a pond 9 in the agricultural parcel 2. This information may for example be stored in the form of a ground plan in which the parts 8, 9 of the agricultural parcel 2 are indicated. This makes it possible, when the agricultural machine 1 comes too close in the vicinity. of the pond 9 or the tree 8, to take relevant movement measures.

In the embodiment shown in the figure, the mechanical detecting device 5 is constituted by arms 10 that comprise each a feeler 11. Each of the arms 10 is rotatably disposed on the agricultural machine 1 via an axis 12. It is pointed out here that also other ways of movably disposing on the agricultural machine are possible. The feelers 11 are further pivotably disposed relative to the arms 10 by means of pivot axes 13. When the agricultural machine 1 is moving in the direction of a human being 14, the feelers 11 touch the human being 14 at a given moment, as a result of which a pivoting movement in the pivot axis 13 occurs. The degree of pivoting is a measure for the force exercised on the mechanical detecting device. A signal whose magnitude corresponds to the degree of pivoting is transmitted to the stopping element 6 which, in dependence on the magnitude of the signal, interrupts the drive 7 for stopping the movement of the agricultural machine 1 and, if desired, also interrupts the drive of the mowing unit 3.

Depending on the direction of travel as determined by the direction-of-travel-determining element, the arms can be rotated about the axis 12 in such a way that said arms are positioned in the direction of travel for the purpose of correctly detecting objects.

The functioning of the mechanical detecting device 5 can be checked regularly by colliding at a low speed with the tree 8 in order to detect the reaction of the mechanical detecting device. In the embodiment shown the magnitude of the (checking) signal in the stopping element 6, which signal acts as checking device, is then measured and when an incorrect value is established, the stopping element 6 interrupts the drive 7 of the wheels and the drive of the mowing unit 3.

It will be obvious that the invention is not limited to the above-described embodiments. The mechanical detecting device may comprise for example a comb, a roll with feelers, or a bracket with feelers. Further, other checking means may be applied for checking the correct functioning of the mechanical detecting device.

## Claims

1. An agricultural machine for performing an agricultural operation, in particular crop processing, which agricultural machine (1) is movable over an agricultural parcel (2), the agricultural machine being provided with a mechanical detecting device (5) for detecting a force acting on the detecting device (5) and for emitting a detection signal depending on the detected force, and with a stopping element (6) for stopping the movement of the agricultural machine (1) in dependence on the detection signal, **characterized in that** the agricultural machine (1) is provided with a checking device for checking the functioning of the mechanical detecting device (5), and for emitting a checking signal.

2. An agricultural machine as claimed in claim 1, **characterized in that** the stopping element is connected to the checking device for receiving the checking signal, the functioning of the stopping element depending on the received checking signal.

3. An agricultural machine as claimed in claim 1, **characterized in that** the agricultural machine is an autonomous agricultural machine.

4. An agricultural machine as claimed in any one of the preceding claims, **characterized in that** the stopping element is suitable for stopping the agricultural operation, in particular crop processing, in dependence on the detection signal.

5. An agricultural machine as claimed in any one of the preceding claims, **characterized in that** the mechanical detecting device comprises a comb.

6. An agricultural machine as claimed in any one of the preceding claims, **characterized in that** the mechanical detecting device comprises a roll with feelers.

7. An agricultural machine as claimed in any one of the preceding claims, **characterized in that** the mechanical detecting device comprises a bracket with feelers.

8. An agricultural machine as claimed in any one of the preceding claims, **characterized in that** the mechanical detecting device comprises an arm with a feeler.

9. An agricultural machine as claimed in any one of the preceding claims, **characterized in that** the mechanical detecting device is movably disposed on the agricultural machine.

10. An agricultural machine as claimed in any one of the preceding claims, **characterized in that** the mechanical detecting device is pivotably disposed on the agricultural machine.

11. An agricultural machine as claimed in any one of the preceding claims **characterized in that** the agricultural machine comprises a direction-of-travel-determining element for determining the direction of travel of the agricultural machine.

12. An agricultural machine as claimed in claims 9 and 11, **characterized in that** the mechanical detecting device is movable with the aid of data from the direction-of-travel-determining element.

## Patentansprüche

1. Landwirtschaftliche Maschine zum Durchführen einer landwirtschaftlichen Arbeit, insbesondere einer Gutaufbereitung, wobei die landwirtschaftliche Maschine (1) über eine landwirtschaftliche Parzelle (2) bewegbar ist, wobei die landwirtschaftliche Maschine mit einer mechanischen Detektiervorrichtung (5) versehen ist, um eine auf die Detektiervorrichtung (5) wirkende Kraft zu detektieren und in Abhängigkeit von der detektierten Kraft ein Detektionssignal auszugeben, sowie mit einem Stoppelement (6), um in Abhängigkeit von dem Detektionssignal die Bewegung der landwirtschaftlichen Maschine (1) zu stoppen,
**dadurch gekennzeichnet, dass** die landwirtschaftliche Maschine (1) mit einer Prüfvorrichtung versehen ist, um die Funktion der mechanischen Detektiervorrichtung (5) zu überprüfen und ein Prüfsignal auszugeben.

2. Landwirtschaftliche Maschine nach Anspruch 1,
**dadurch gekennzeichnet, dass** das Stoppelement mit der Prüfvorrichtung verbunden ist, um das Prüfsignal zu empfangen, wobei die Funktion des Stoppelements von dem empfangenen Prüfsignal abhängt.

3. Landwirtschaftliche Maschine nach Anspruch 1,
**dadurch gekennzeichnet, dass** die landwirtschaftliche Maschine eine autonome landwirtschaftliche Maschine ist.

4. Landwirtschaftliche Maschine nach einem der vorhergehenden Ansprüche,
**dadurch gekennzeichnet, dass** das Stoppelement geeignet ist, die landwirtschaftliche Arbeit, insbesondere die Gutaufbereitung, in Abhängigkeit von dem Detektionssignal zu stoppen.

5. Landwirtschaftliche Maschine nach einem der vorhergehenden Ansprüche,
**dadurch gekennzeichnet, dass** die mechanische Detektionsvorrichtung einen Kamm umfasst.

6. Landwirtschaftliche Maschine nach einem der vorhergehenden Ansprüche,
**dadurch gekennzeichnet, dass** die mechanische Detektionsvorrichtung eine Rolle mit Fühlern umfasst.

7. Landwirtschaftliche Maschine nach einem der vorhergehenden Ansprüche,
**dadurch gekennzeichnet, dass** die mechanische Detektionsvorrichtung einen Bügel mit Fühlern umfasst.

8. Landwirtschaftliche Maschine nach einem der vorhergehenden Ansprüche,
**dadurch gekennzeichnet, dass** die mechanische Detektionsvorrichtung einen Arm mit einem Fühler umfasst.

9. Landwirtschaftliche Maschine nach einem der vorhergehenden Ansprüche,
**dadurch gekennzeichnet, dass** die mechanische Detektionsvorrichtung beweglich an der landwirtschaftlichen Maschine angeordnet ist.

10. Landwirtschaftliche Maschine nach einem der vorhergehenden Ansprüche,
**dadurch gekennzeichnet, dass** die mechanische Detektionsvorrichtung schwenkbar an der landwirtschaftlichen Maschine angeordnet ist.

11. Landwirtschaftliche Maschine nach einem der vorhergehenden Ansprüche,
**dadurch gekennzeichnet, dass** die landwirtschaftliche Maschine ein Fahrtrichtungs-Ermittlungselement zum Ermitteln der Fahrtrichtung der landwirtschaftlichen Maschine umfasst.

12. Landwirtschaftliche Maschine nach den Ansprüchen 9 und 11,
**dadurch gekennzeichnet, dass** die mechanische Detektionsvorrichtung mit Hilfe von Daten von dem Fahrtrichtungs-Ermittlungselement bewegbar ist.

## Revendications

1. Machine agricole pour la réalisation d'une opération agricole, en particulier le traitement d'une récolte, cette machine agricole (1) peut être déplacée sur une parcelle agricole (2), la machine agricole étant dotée d'un dispositif de détection mécanique (5) permettant de détecter une force agissant sur le dispositif de détection (5) et d'émettre un signal de détection en fonction de la force détectée, et d'un élément d'arrêt (6) permettant d'arrêter le mouvement de la machine agricole (1) en fonction du signal de détection, **caractérisée en ce que** la machine agricole (1) est dotée d'un dispositif de contrôle permettant de contrôler le fonctionnement du dispositif de détection mécanique (5) et d'émettre un signal de contrôle.

2. Machine agricole selon la revendication 1, **caractérisée en ce que** l'élément d'arrêt est connecté au dispositif de contrôle pour recevoir le signal de contrôle, le fonctionnement de l'élément d'arrêt dépendant du signal de contrôle reçu.

3. Machine agricole selon la revendication 1, **caractérisée en ce que** la machine agricole est une machine agricole autonome.

4. Machine agricole selon l'une quelconque des revendications précédentes, **caractérisée en ce que** l'élément d'arrêt convient pour arrêter une opération agricole, en particulier le traitement de récolte, en fonction du signal de détection.

5. Machine agricole selon l'une quelconque des revendications précédentes, **caractérisée en ce que** le dispositif de détection mécanique comprend un peigne (ou « comb » en anglais).

6. Machine agricole selon l'une quelconque des revendications précédentes, **caractérisée en ce que** le dispositif de détection mécanique comprend un rouleau muni de tâteurs.

7. Machine agricole selon l'une quelconque des revendications précédentes, **caractérisée en ce que** le dispositif de détection mécanique comprend un support muni de tâteurs.

8. Machine agricole selon l'une quelconque des revendications précédentes, **caractérisée en ce que** le dispositif de détection mécanique comprend un bras muni de tâteurs.

9. Machine agricole selon l'une quelconque des revendications précédentes, **caractérisée en ce que** le dispositif de détection mécanique est disposé sur la machine agricole de façon à pouvoir être déplacé.

10. Machine agricole selon l'une quelconque des revendications précédentes, **caractérisée en ce que** le dispositif de détection mécanique est disposé sur la machine agricole de façon à pouvoir pivoter.

11. Machine agricole selon l'une quelconque des revendications précédentes, **caractérisée en ce que** la machine agricole comprend un élément de détermination du sens de course permettant de déterminer le sens de course de la machine agricole.

12. Machine agricole selon les revendications 9 et 11, **caractérisée en ce que** le dispositif de détection mécanique peut être déplacé à l'aide des données de l'élément de détermination du sens de course.
